# FASCICULE DE BREVET EUROPEEN

(11) **EP 2 908 472 B1**
(45) Date de publication et mention de la délivrance du brevet: **06.06.2018**
(21) Numéro de dépôt: 15153149.8
(22) Date de dépôt: 30.01.2015
(51) Int. Cl.: H04L 29/08, G06F 3/0481, H04L 12/28

(54) **Procédé de pilotage d'une installation domotique à multi environnements graphiques**
Verfahren zum Bedienen einer Heimanlage mit Multi-Grafik-Umgebungen
Method for controlling a home-automation installation with multiple graphic environments

(30) Priorité: 17.02.2014 FR 1451237
(43) Date de publication de la demande: 19.08.2015
(73) Titulaire: SOMFY ACTIVITES SA, 74300 Cluses (FR)
(72) Inventeur: Devis, Frédéric, 74330 EPAGNY (FR); Duchene, Isabelle, 74970 MARIGNIER (FR)
(74) Mandataire: Novaimo

(56) Documents cités:
- FR-A1- 2 956 224
- US-A1- 2010 191 352

## Description

### Domaine technique de l'invention

L'invention concerne le domaine de la domotique.

L'invention a pour objet plus particulièrement un procédé de pilotage de services domotiques d'une installation domotique.

### État de la technique

La demande de brevet français FR 2 956 224 divulgue un procédé et un système de commande d'équipements domestiques le dispositif comprenant un écran de visualisation, affecté à l'affichage, à un premier niveau, d'icônes d'équipements et, à un deuxième niveau, d'icônes de regroupement, un ensemble d'équipements domotiques étant associé à une icône de regroupement, et des moyens de sélection d'au moins une icône de regroupement et/ou d'au moins une icône d'équipement, dans lequel une action sur une touche de commande a pour effet une commande de l'ensemble des équipements associés à plusieurs icônes sélectionnées. Dans le domaine de la domotique, différents services domotiques peuvent être développés par différents acteurs du marché. Ces services domotiques sont proposés à un même utilisateur de manière totalement indépendante, par le biais d'applications logicielles différentes et/ou de moyens de communications différents.

L'expérience utilisateur n'est donc pas ergonomique, ceci étant un frein à l'installation et à l'utilisation de différents services domotiques par ledit utilisateur.

### Objet de l'invention

Le but de la présente invention est de proposer une solution permettant d'améliorer l'ergonomie actuelle.

On tend vers ce but grâce à un procédé de pilotage de services domotiques d'une installation domotique suivant la revendication 1. Selon un exemple, l'étape d'affichage est telle que les premier et deuxième éléments sont affichés simultanément à l'écran.

Selon un autre exemple, l'étape d'affichage est telle que le deuxième élément est agencé de sorte à :
- entourer le premier élément, ou
- être adjacent au premier élément, ou
- être inclus dans le premier élément, notamment sous la forme d'une icône.

Selon une mise en oeuvre, l'étape d'affichage est réalisée de telle sorte que les premier et deuxième éléments ne soient pas affichés simultanément, le deuxième élément comportant des éléments d'interaction permettant de sélectionner le contenu du premier élément et de provoquer l'affichage dudit premier élément sur l'écran, chacun desdits au moins deux environnements graphiques comportant un élément d'interaction permettant le retour à l'affichage du deuxième élément sur l'écran.

De préférence, le procédé comporte une étape de configuration de l'affichage souhaité à l'écran par un utilisateur, permettant notamment d'adapter selon les besoins la présentation du deuxième élément. Préférentiellement, l'étape d'affichage de l'interface graphique sur l'écran est réalisée de telle sorte à présenter le premier élément et le deuxième élément, le deuxième élément comportant au moins deux onglets, dont un est actif, et associés chacun à l'un desdits au moins deux environnements graphiques, et l'environnement graphique correspondant à l'onglet actif est affiché à l'écran comme contenu du premier élément. En ce sens, le procédé peut comporter les étapes suivantes :
- sélectionner, parmi lesdits au moins deux onglets, un onglet à activer distinct de l'onglet actif courant,
- activer l'onglet sélectionné en modifiant le contenu du premier élément affiché, ledit contenu modifié correspondant à l'environnement graphique associé audit onglet sélectionné de sorte à provoquer un changement de charte graphique au sein du premier élément.

Selon une réalisation, le procédé comporte une étape de choix de pilotage d'un actionneur domotique au travers d'un ou d'un autre environnement graphique à partir duquel la commande de l'actionneur domotique est accessible, ou plus particulièrement une étape de choix de pilotage d'un actionneur domotique au travers d'un ou d'un autre de deux environnements graphiques à partir desquels la commande de l'actionneur domotique est accessible.

Le procédé peut comporter une étape dans laquelle au moins l'un des actionneurs domotiques est actionné à partir de deux environnements distincts.

En particulier, le procédé peut comporter une première étape d'actionnement d'un des actionneurs domotiques consécutivement à une étape d'interaction d'un utilisateur avec une fonction associée à l'un desdits au moins deux environnements graphiques contenu dans le premier élément, et une deuxième étape d'actionnement dudit actionneur domotique actionné lors de la première étape d'actionnement consécutivement à une étape d'interaction de l'utilisateur avec une fonction associée à un autre desdits au moins deux environnements graphiques contenu dans le premier élément.

Par exemple, le procédé comporte une étape d'interaction d'un utilisateur avec le contenu du premier élément affiché à l'écran d'où il résulte une étape d'actionnement d'au moins l'un des actionneurs domotiques.

L'invention est aussi relative à une installation domotique suivant la revendication 12. L'invention est aussi relative à un dispositif de supervision d'une installation domotique suivant la revendication 11.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 est une vue schématique de différentes étapes d'un procédé de pilotage selon un mode d'exécution particulier de l'invention,
- les figures 2 et 3 illustrent deux vues différentes d'une même interface graphique dont le contenu du premier élément diffère,
- la figure 4 illustre une variante de réalisation de l'interface graphique,
- la figure 5 illustre une réalisation particulière d'une installation domotique,
- la figure 6 illustre un exemple d'interaction utilisateur avec une interface graphique d'un type particulier.

### Description de modes préférentiels de l'invention

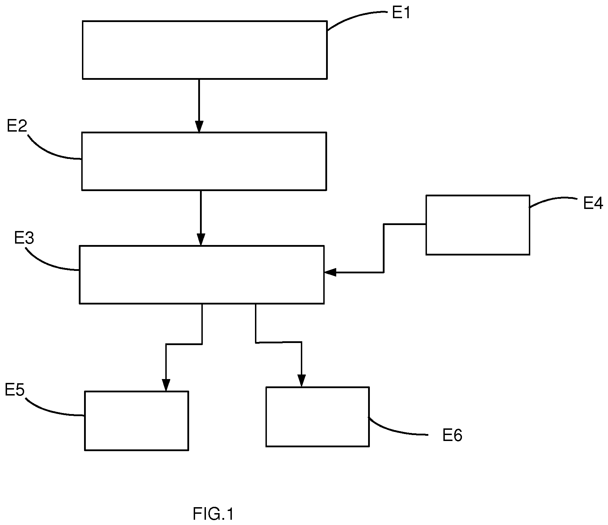

Selon une mise en oeuvre, notamment illustrée aux figures 1 à 4, le procédé de pilotage de services domotiques d'une installation domotique comporte une étape de fourniture E1 d'au moins deux environnements graphiques 101, 102 associés respectivement à des services domotiques différents et permettant la commande d'actionneurs domotiques de l'installation domotique, lesdits au moins deux environnements graphiques 101, 102 présentant des chartes graphiques différentes.

Autrement dit, le procédé de pilotage de services domotiques d'une installation domotique comporte une étape de fourniture E1 d'au moins un premier et un deuxième environnements graphiques 101, 102 associés respectivement à des premier et deuxième services domotiques permettant la commande d'actionneurs domotiques de l'installation domotique, lesdits au moins premier et deuxième environnements graphiques 101, 201 présentant respectivement une première et une deuxième chartes graphiques. Les premier et deuxième services domotiques sont différents au moins partiellement. Les première et deuxième chartes graphiques sont différentes au moins partiellement.

Une installation domotique est définie pour un bâtiment, ou une partie d'un bâtiment, avec lequel un utilisateur, généralement occupant du bâtiment ou de la partie du bâtiment, est susceptible d'interagir, notamment en utilisant l'interface graphique.

Par « environnement graphique » on entend un ensemble de contenus d'une interface graphique avec lesquels l'utilisateur peut interagir pour gérer l'ensemble des services domotiques associés à l'environnement graphique, chaque contenu offrant à l'utilisateur la possibilité de gérer au moins une partie des services domotiques associé à l'environnement graphique. Chaque contenu d'un même environnement graphique donne donc à l'utilisateur accès à une partie des services domotiques en lui permettant de sélectionner et réaliser des fonctions associées aux services domotiques, ces fonctions permettant le pilotage d'un ou plusieurs des actionneurs domotiques.

Par « charte graphique d'un environnement graphique», on entend que l'environnement graphique contient des règles d'utilisation de signes graphiques qui constituent son identité graphique. Ainsi, l'ensemble des contenus d'un même environnement graphique conserve une cohérence visuelle, permettant à l'utilisateur d'identifier facilement l'environnement graphique ainsi que le fournisseur des services domotiques associés.

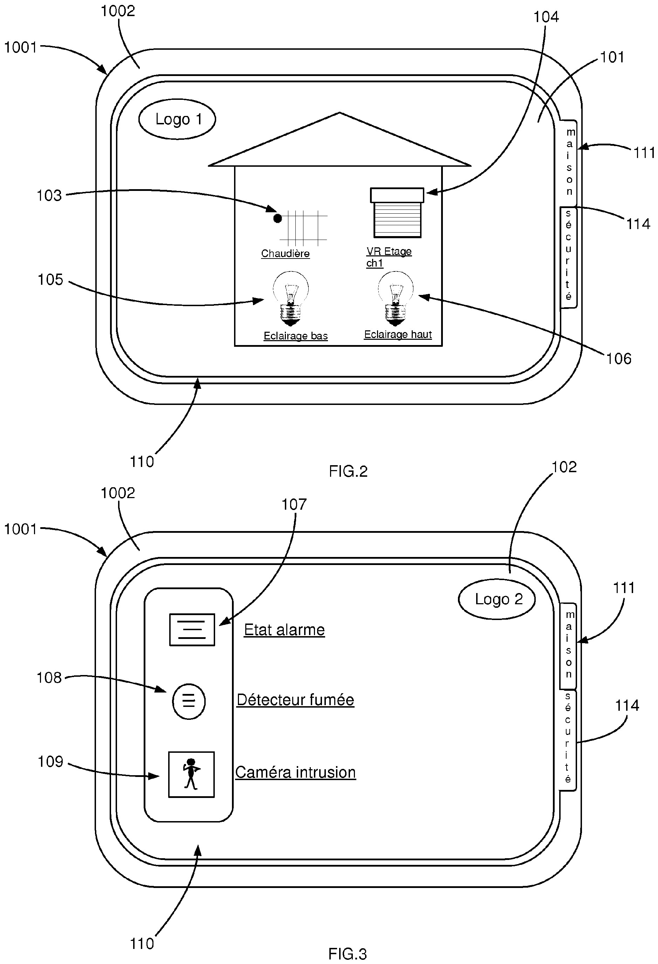

En fait, deux services domotiques respectivement associés à deux environnements graphiques distincts peuvent être fournis par deux sociétés distinctes souhaitant chacune fournir au sein d'une même application leurs services domotiques. Dans ce cas, l'utilisation de deux chartes graphiques différentes permet, d'une part, aux sociétés de ne pas perdre leur identité graphique identifiable par un utilisateur, et, d'autre part, d'éviter toute confusion par conservation des chartes graphiques auxquelles l'utilisateur est habitué. Par exemple, les figures 2 et 3 illustrent deux environnements graphiques 101 et 102 différents munis de logos différents (Logo1 et Logo2) ainsi que d'une présentation différente représentative de l'identité graphique de l'environnement graphique.

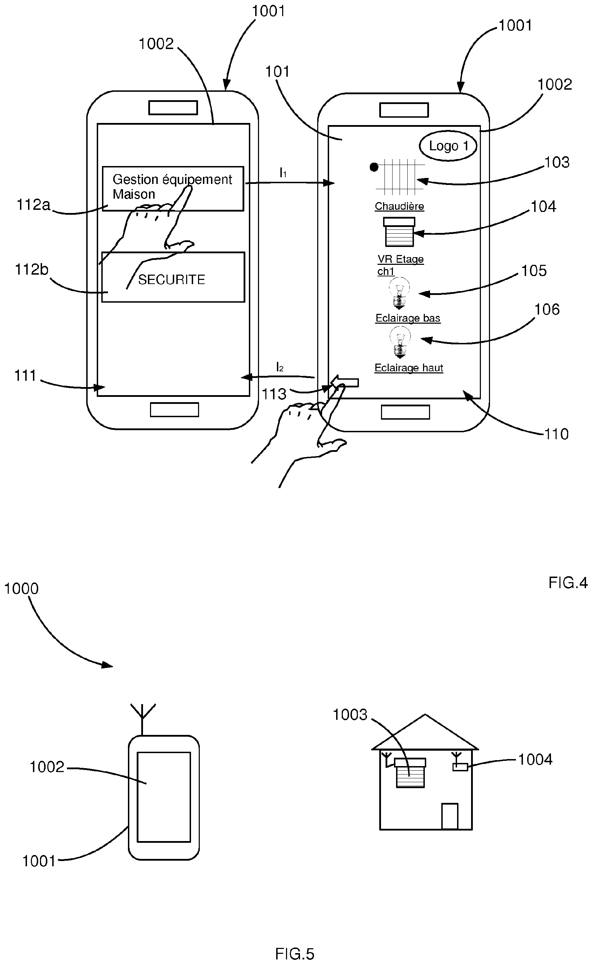

Selon un exemple (figures 2 et 4), les services domotiques associés au premier environnement graphique 101 sont relatifs à la gestion du confort dans l'habitat. Divers actionneurs, comme une chaudière 103, un volet roulant 104, un éclairage du rez-de-chaussée 105 ou d'un étage 106 permettent de mettre en oeuvre les fonctions de confort proposées par les services domotiques associés au premier environnement graphique 101.

Selon un autre exemple, d'autres services domotiques peuvent concerner la sécurité (figure 3), les fonctions de sécurité proposées par ces services domotiques utilisent des interactions avec un ou plusieurs actionneurs de l'installation relatif(s) à la sécurité comme une alarme 107, un détecteur de fumée 108, un capteur de mouvement tel une caméra 109, une serrure, etc. Le volet roulant 104 peut également être associé à ces services domotiques.

Les services domotiques visés ci-avant peuvent être généralistes et/ou experts. Des services domotiques dits « généralistes » permettent par exemple de donner à un utilisateur un contrôle/pilotage possible d'une multiplicité d'actionneurs domotiques selon des fonctions basiques (par exemple ouverture/fermeture totale, éclairage 0%/100%, programmation simplifiée). Une fonction de majordome peut être associée à ces services domotiques généralistes, c'est-à-dire une fonction d'encadrement de services domotiques experts. Les services domotiques dit « experts » peuvent être fournis par un partenaire spécialiste d'un domaine spécifique, comme par exemple la sécurité, la santé, l'audio-visuel) permettant des fonctions de commande et/ou de programmations expertes d'un ensemble plus restreint d'actionneurs domotiques.

Ainsi, il sera par exemple possible de mettre en route ou d'éteindre un dispositif d'alarme en utilisant des services domotiques généralistes, tandis que les services domotiques experts permettront notamment d'associer une ou plusieurs caméras de surveillance, de configurer le nombre de prises de vues par seconde d'une caméra de surveillance, ainsi que différents niveaux d'alerte (bips, alarme sonore, envois de messages par réseau préférentiellement cellulaire notamment des messages sms pour « short message service ») en cas de détection d'intrusion.

En outre, le procédé comporte une étape E2 dans laquelle il est fourni une interface graphique comportant un premier élément 110 dont le contenu est sélectionnable parmi n'importe lequel desdits au moins deux environnements graphiques 101, 102 (en particulier, on peut sélectionner des contenus des environnements graphiques que l'on souhaite voir s'afficher dans le premier élement) et un deuxième élément 111 dont le contenu présente une charte graphique principale conservée quel que soit le contenu sélectionné du premier élément 110 et permettant de sélectionner ledit contenu du premier élément 110.

En pratique, le contenu du deuxième élément 111 permet de sélectionner un contenu du premier élément 110 qui est représentatif de l'un des environnements graphiques, parmi l'ensemble des contenus de cet environnement graphique, ce contenu du premier élément 110 pouvant ensuite être modifié.

Les premier et deuxième éléments 110, 111 sont des entités de l'interface graphique aptes à être affichées sur un écran. Le premier élément 110 et/ou deuxième élément 111 peuvent par exemple être chacun une fenêtre de l'interface graphique, ou une zone particulière d'un affichage de l'interface graphique reproduit sur l'écran.

On comprend alors que de manière générale le procédé comporte une étape d'affichage E3 d'au moins une partie de l'interface graphique sur un écran.

Par « affichage d'au moins une partie de l'interface graphique », on entend que les éléments de l'interface graphique ne sont pas forcément affichés en même temps à l'écran.

Selon une mise en oeuvre particulière, lorsque les premier et deuxième éléments 110, 111 de l'interface graphique sont affichés en même temps à l'écran, le deuxième élément 111 s'étend sur une surface d'affichage de l'interface graphique à l'écran très inférieure à celle occupée par le premier élément 110. En particulier, le deuxième élément 111 s'étend sur une surface inférieure à 10% de la surface d'affichage disponible de l'interface graphique sur l'écran.

Selon un premier mode d'exécution illustré aux figures 2 et 3, l'étape d'affichage est telle que les premier et deuxième éléments 110, 111 sont affichés simultanément à l'écran, préférentiellement de la manière décrite dans la mise en oeuvre particulière ci-dessus. Par exemple, l'étape d'affichage E3 est telle que le deuxième élément 111 est agencé de sorte à entourer le premier élément (figure 2 et 3). Le deuxième élément 111 prend alors préférentiellement la forme d'une bordure de fenêtre d'affichage, dans laquelle est affiché le premier élément 110 et muni sur un côté d'une série d'onglets de sélection. Alternativement, le deuxième élément peut être adjacent au premier élément (non représenté) : le deuxième élément se présente alors préférentiellement sous la forme d'une bande d'affichage, adjacente au premier élément, dans laquelle est représentée une série d'onglets de sélection. Alternativement, le deuxième élément peut être inclus dans le premier élément (non représenté), notamment sous la forme d'une icône apparaissant dans la zone d'affichage du premier élément.

Alternativement, selon un deuxième mode d'exécution illustré à la figure 4, l'étape d'affichage E3 est réalisée de telle sorte que les premier 110 et deuxième 111 éléments ne soient pas affichés simultanément. En ce sens le deuxième élément 111 peut comporter des éléments d'interaction 112a, 112b permettant de sélectionner le contenu du premier élément 110 et de provoquer l'affichage dudit premier élément (et donc de son contenu) 110 sur l'écran. Chacun desdits au moins deux environnements graphiques 101, 102 peut comporter un élément d'interaction 113 permettant le retour à l'affichage du deuxième élément 111 sur l'écran.

L'élément d'interaction 112a, 112b diffère alors du deuxième élément 111 en ce qu'il permet un affichage du deuxième élément 111, par exemple sous forme d'une zone de l'écran avec un menu de sélection, à partir duquel sera réalisée la sélection du contenu du premier élément 110. Sur cette figure 4 sont représentées deux vues d'un même écran par exemple d'un téléphone mobile, le passage de la vue de gauche à la vue de droite est réalisé par une première interaction I₁, schématisée par une main avec l'élément d'interaction 112a et le passage de la vue de droite à celle de gauche est réalisé par une deuxième interaction I₂, schématisée par une main avec l'élément d'interaction 113. On comprend ici que les éléments d'interaction du deuxième élément 111 peuvent être chacun formé par un bouton lié à l'un des environnements graphiques, une interaction avec le bouton permettant d'une part de sélectionner le contenu du premier élément 110 et de passer d'un affichage du deuxième élément 111 à un affichage du premier élément 110. Par ailleurs, l'élément d'interaction 113 de chacun des environnements graphiques peut être un bouton, se présentant par exemple sous la forme d'une flèche de retour, dont l'activation provoque le passage de l'affichage du premier élément 110 vers l'affichage du deuxième élément 111.

Selon un exemple de réalisation, les deux environnements graphiques 101, 102 partagent au moins des éléments d'ergonomie communs. Par exemple, une action sur un élément d'interaction dans un premier contenu, associé à un des environnements graphiques, du premier élément 110 aura le même effet de navigation que l'action sur cet élément d'interaction dans un deuxième contenu, associé à un autre des environnements graphiques, du premier élément 110. Ceci permet d'obtenir une cohérence globale sur l'ensemble des environnements graphiques proposés, sans toutefois pénaliser l'identité visuelle liée à chaque environnement graphique.

Avantageusement, l'étape d'affichage E3 est réalisée de sorte que la mise à disposition des différents environnements graphiques 101, 102 soit égalitaire. En fait, ceci permet d'assurer que le choix de l'environnement graphique 101, 102 à partir du deuxième élément 111 ne soit pas favorisé. Autrement dit, l'étape d'affichage E3 est telle qu'elle n'influence pas le choix de l'utilisateur quant aux services domotiques qu'il souhaite activer. Ceci est avantageux lorsque les différents environnements graphiques 101, 102 sont associés à des sociétés concurrentes du domaine qui souhaitent mutualiser leurs services domotiques à l'avantage de l'utilisateur, mais sans perdre leur avantage concurrentiel. Dans ce cas, le deuxième élément 111 agit comme un portail de sélection présentant des services domotiques sans incitation d'en utiliser un plus qu'un autre. Par exemple, une mise à disposition égalitaire des différents environnements graphiques peut comporter une étape d'affichage sur l'écran d'une page d'accueil (par exemple avec menus), ou d'une messagerie commune.

Dans un souci d'améliorer l'ergonomie tout en respectant la notion de mise à disposition égalitaire évoquée ci-dessus, chaque utilisateur peut être amené à adapter l'interface graphique ou les contenus de celle-ci à ses envies ou besoins. En ce sens, le procédé peut comporter une étape de configuration E4 (figure 1) de l'affichage souhaité à l'écran par l'utilisateur, permettant notamment d'adapter selon les besoins la présentation du deuxième élément 111. Selon un exemple, cette étape de configuration E4 de l'affichage peut aussi permettre à un utilisateur de choisir quel environnement graphique par défaut il souhaite voir s'afficher comme contenu du premier élément 110 lorsqu'il initialise le procédé de pilotage (une telle initialisation peut être réalisée par le lancement d'une application logicielle correspondante), ou l'ordre dans lequel apparaissent les environnements graphiques sur l'interface graphique ou de manière plus générale la disposition du contenu du deuxième élément 111. Parmi les fonctions associées à l'étape de la configuration E4 de l'affichage, on peut aussi citer l'ajout d'un nouvel environnement graphique, le redimensionnement du premier élément 110 et/ou du deuxième élément 111, ou de manière générale toute fonction permettant d'organiser l'affichage de l'interface graphique.

Selon une mise en oeuvre particulière illustrée aux figures 2 et 3, la navigation entre les environnements graphiques 101, 102 comporte l'utilisation d'onglets 114 appartenant au deuxième élément 111. Par exemple, l'étape d'affichage E3 de l'interface graphique sur l'écran est réalisée de telle sorte à présenter le premier élément 110 et le deuxième élément 111 (c'est-à-dire que les premier et deuxième éléments - et donc leurs contenus - sont affichés simultanément). Le deuxième élément 111 comporte alors au moins deux onglets 114, dont un est actif, et associés chacun à l'un desdits au moins deux environnements graphiques 101, 102 (cette association étant préférentiellement bijective, c'est-à-dire qu'un onglet pointe vers un unique environnement graphique et inversement un environnement graphique est associé à un unique onglet). L'environnement graphique correspondant à l'onglet actif est affiché à l'écran comme contenu du premier élément 110. Dès lors, pour mettre en oeuvre la navigation, le procédé peut comporter une étape de sélection, parmi lesdits au moins deux onglets 114, d'un onglet à activer distinct de l'onglet actif courant, puis une étape d'activation de l'onglet 114 sélectionné en modifiant le contenu du premier élément 110 affiché, ledit contenu modifié correspondant à l'environnement graphique 101, 102 associé audit onglet à activer de sorte à provoquer un changement de charte graphique au sein du premier élément 110. Cette mise en oeuvre particulière est préférée car elle permet à un utilisateur de passer de l'un des environnements graphiques à n'importe lequel autre environnement graphique par une unique interaction avec un onglet.

Comme évoqué précédemment, le procédé de pilotage permet la commande d'actionneurs domotiques. Un même actionneur domotique peut être mutualisé à plusieurs services domotiques et donc être actionnable à partir de différents environnements graphiques 101, 102. Ceci permet à un utilisateur de limiter les coûts sans avoir à dupliquer le nombre d'actionneurs domotiques en fonction du nombre de services domotiques et/ou de prestataires de services domotiques. Dès lors, le procédé peut comporter une étape E5 (figure 1) de choix de pilotage d'un actionneur domotique au travers d'un ou d'un autre environnement graphique 101, 102 à partir duquel la commande de l'actionneur domotique est accessible, plus particulièrement, le procédé peut comporter une étape E5 de choix de pilotage d'un actionneur domotique au travers d'un ou d'un autre de deux environnements graphiques 101, 102 à partir desquels la commande de l'actionneur domotique est accessible. Cette étape de choix comprend donc une étape d'interaction d'un utilisateur avec le contenu du premier élément 110 sélectionné et affiché à l'écran d'où il résulte une étape d'actionnement d'au moins l'un des actionneurs domotiques.

De manière conséquente, le procédé peut comporter une étape E6 (figure 1) dans laquelle au moins l'un des actionneurs domotiques est actionné à partir de deux environnements graphiques distincts. Par exemple, le procédé comporte une première étape d'actionnement d'un des actionneurs domotiques consécutivement à une étape d'interaction d'un utilisateur avec une fonction associée à l'un desdits au moins deux environnements graphiques contenu dans le premier élément 110, et une deuxième étape d'actionnement dudit actionneur domotique actionné lors de la première étape d'actionnement consécutivement à une étape d'interaction de l'utilisateur avec une fonction associée à un autre desdits au moins deux environnements graphiques contenu dans le premier élément 110. Implicitement, on a donc, entre les deux étapes d'interaction, une étape de modification de l'environnement graphique contenu dans le premier élément 110.

On comprend de ce qui a été dit ci-dessus que de manière générale, le procédé peut comporter une étape d'interaction d'un utilisateur avec le contenu du premier élément 110 affiché à l'écran d'où il résulte une étape d'actionnement d'au moins l'un des actionneurs domotiques.

L'invention est aussi relative à une installation domotique 1000 (figure 5) configurée de sorte à mettre en oeuvre le procédé de pilotage tel décrit. Une telle installation comporte un dispositif de supervision 1001 (figures 2, 3, 4, 5), notamment mobile comme une tablette numérique ou un téléphone intelligent, comprenant l'écran 1002 (figures 2, 3, 4, 5) sur lequel est affiché au moins une partie de l'interface graphique.

De préférence, l'installation comporte des actionneurs domotiques 1003 (représenté par un volet roulant à la figure 5), au moins un des actionneurs domotiques (et de préférence chaque actionneur domotique) 1003 étant relié au dispositif de supervision 1001 de telle sorte à pouvoir être piloté à partir de deux environnements graphiques distincts.

Par « relié », on entend préférentiellement l'utilisation d'un lien de communication par exemple à fil ou sans fil. Autrement dit, dans le cadre du procédé, l'actionnement d'un actionneur domotique peut mettre en oeuvre une étape de propagation d'un signal de commande par voie sans fil ou filaire. En outre, selon une réalisation préférée, l'installation domotique 1000 comporte un boîtier maître 1004 auquel sont reliés, avec ou sans fil, le dispositif de supervision 1001 et chacun des actionneurs domotiques 1003. Dès lors, le dispositif de supervision 1001 est relié à chacun des actionneurs domotiques 1003 par l'intermédiaire du boîtier maître 1004.

De manière générale applicable à l'ensemble de la description, au moins l'un des actionneurs domotiques peut être :
- un actionneur de manoeuvre d'un élément mobile d'un équipement domotique de fermeture, d'occultation ou d'écran, ou
- un dispositif de chauffage, de ventilation ou d'éclairage,
- un objet électrique connecté.

L'invention est aussi relative à un dispositif de supervision 1001 (figures 2 à 5) d'une installation domotique, notamment telle que celle décrite ci-dessus. Le dispositif de supervision comprend au moins deux environnements graphiques 101, 102 associés respectivement à des services domotiques différents et permettant la commande d'actionneurs domotiques de l'installation domotique. Lesdits au moins deux environnements graphiques 101, 102 présentent des chartes graphiques différentes. Le dispositif de supervision 1001 comporte en outre un écran 1002 sur lequel est affiché au moins une partie d'une interface graphique pour installation domotique. Comme évoqué précédemment, ladite interface graphique comporte un premier élément 110 dont le contenu est sélectionnable parmi n'importe lequel desdits au moins deux environnements graphiques 101, 102 et un deuxième élément 111 dont le contenu présente une charte graphique principale conservée quel que soit le contenu sélectionné du premier élément 110 et permettant de sélectionner ledit contenu du premier élément 110.

Préférentiellement, l'écran 1002 est tactile.

Le dispositif de supervision 1001 peut comporter une mémoire munie d'instructions de mise en oeuvre du procédé de pilotage tel que décrit.

Dans la présente description, lorsque l'on parle d'un élément affiché, c'est implicitement le contenu dudit élément qui est affiché.

Il a été donné ci-avant des exemples de services domotiques, à titre d'exemple chaque environnement graphique est associé à un service domotique choisi parmi : une expertise de la gestion d'énergie, une expertise de la sécurité, une expertise de la santé et du maintien à domicile. Le deuxième élément sert alors de majordome quant au choix de l'interaction utilisateur avec ces environnements graphiques/services domotiques.

La solution décrite permet de :
- valoriser différents environnements graphiques notamment associés à des marques différentes,
- de fluidifier l'expérience utilisateur,
- de limiter le nombre d'interaction de l'utilisateur avec l'interface graphique,
- de maintenir un positionnement générique du deuxième élément.

En pratique, un utilisateur agit sur l'interface graphique au cours des étapes suivantes :
- S1 : il choisit un environnement graphique parmi l'ensemble des environnements graphiques disponibles et sélectionne un contenu du premier élément, par interaction avec le deuxième élément de l'interface graphique,
- S2 : en cas de besoin, il interagit avec le contenu du premier élément pour sélectionner un autre contenu de l'environnement graphique propre à permettre la commande d'un actionneur domotique souhaité,
- S3 : il interagit avec le contenu du premier élément pour piloter l'actionneur domotique souhaité.

Dans le cas de la figure 2, par exemple pour la commande du volet roulant de la chambre 1 à l'étage, l'utilisateur sélectionne tout d'abord l'onglet maison, puis l'icône représentant le volet roulant 104. Le contenu du premier élément est alors modifié pour laisser apparaître des éléments de commande dédiés au volet roulant 104. L'utilisateur interagit alors avec l'un de ces éléments de commande pour piloter le volet roulant en ouverture.

Alternativement, l'utilisateur peut sélectionner l'onglet « sécurité », puis l'icône représentant les volets roulants. Le contenu du premier élément est alors modifié pour laisser apparaître une liste des volets roulants de la maison. L'utilisateur peut alors sélectionner l'icône associée au volet roulant de la chambre à l'étage. Le contenu du premier élément est alors modifié pour laisser apparaître des éléments de commande dédiés au volet roulant 104. L'utilisateur interagit alors avec l'un de ces éléments de commande pour programmer une ouverture du volet roulant en cas de détection de fumée, Dans ces différents cas, les contenus du premier élément respectent la charte graphique associée à l'environnement graphique choisi et les contenus affichés pour la commande du volet roulant dans le premier cas diffèrent des contenus affichés dans le deuxième cas, notamment les chartes graphiques utilisées dans les deux cas diffèrent.

Par pilotage d'un actionneur domotique, on entend le pilotage d'un seul actionneur ou d'un groupe d'actionneur selon une même commande, ou d'un groupe d'actionneur selon des commandes différentes, par exemple selon un scénario prédéfini, le scénario comprenant un ensemble d'ordres associés à différents actionneurs participant au scénario.

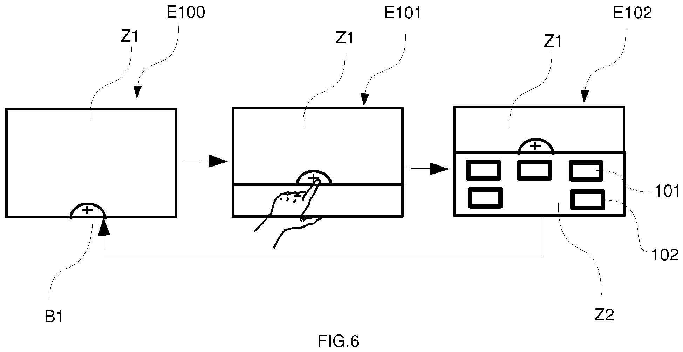

Selon autre exemple de réalisation illustré à la figure 6, le procédé peut être tel que lors de son initialisation il affiche (étape E100) à l'écran une page d'accueil dans une zone Z1 et au niveau du bord de cette zone Z1 un bouton B1 d'interaction. En cas d'interaction (étape E101) avec le bouton B1 l'écran affiche (E103) une zone 2 de choix de l'environnement graphique 101, 102 (dans l'exemple consécutivement à l'interaction les zones Z1 et Z2 sont affichées simultanément). Dès lors, le choix de l'un des environnements graphiques provoque le retour à l'étape E100 avec affichage, dans la zone Z1, de l'environnement graphique sélectionné.

## Revendications

1. Procédé de pilotage de services domotiques d'une installation domotique **caractérisé en ce qu'**il comporte les étapes suivantes :
- fournir (E1) au moins deux environnements graphiques (101, 102) associés respectivement à des services domotiques différents et permettant la commande d'actionneurs domotiques de l'installation domotique, lesdits au moins deux environnements graphiques (101, 102) présentant des chartes graphiques différentes,
- fournir (E2) une interface graphique comportant un premier élément (110) dont le contenu est sélectionnable parmi n'importe lequel desdits au moins deux environnements graphiques (101, 102) et un deuxième élément (111) dont le contenu présente une charte graphique principale conservée quel que soit le contenu sélectionné du premier élément (110) et permettant de sélectionner ledit contenu du premier élément (110),
- afficher (E3) sur un écran au moins une partie de l'interface graphique,
**en ce qu'**il comporte une étape (E5) de choix de pilotage d'un actionneur domotique au travers d'un ou d'un autre de deux environnements graphiques (101, 102) à partir desquels la commande de l'actionneur domotique est accessible, **en ce que** les deux environnements graphiques (101, 102) partagent au moins des éléments d'ergonomie communs, **en ce qu'**une action sur un élément d'interaction dans un premier contenu, associé à un des environnements graphiques, du premier élément (110) aura le même effet de navigation que l'action sur cet élément d'interaction dans un deuxième contenu, associé à un autre des environnements graphiques, du premier élément (110) et **en ce que** le procédé comporte une étape de configuration (E4) de l'affichage, cette étape de configuration de l'affichage permettant de choisir l'environnement graphique (101, 102) par défaut s'affichant comme contenu du premier élément (110) lorsque le procédé de pilotage est initialisé.

2. Procédé selon la revendication précédente, **caractérisé en ce que** l'étape d'affichage (E3) est telle que les premier et deuxième éléments (110, 111) sont affichés simultanément à l'écran.

3. Procédé selon la revendication précédente, **caractérisé en ce que** l'étape d'affichage (E3) est telle que le deuxième élément (111) est agencé de sorte à :
- entourer le premier élément (110), ou
- être adjacent au premier élément (110), ou
- être inclus dans le premier élément (110), notamment sous la forme d'une icône.

4. Procédé selon la revendication 1, **caractérisé en ce que** l'étape d'affichage (E3) est réalisée de telle sorte que les premier et deuxième éléments (110, 111) ne soient pas affichés simultanément, le deuxième élément (111) comportant des éléments d'interaction (112a, 112b) permettant de sélectionner le contenu du premier élément (110) et de provoquer l'affichage dudit premier élément (110) sur l'écran, chacun desdits au moins deux environnements graphiques (101, 102) comportant un élément d'interaction (113) permettant le retour à l'affichage du deuxième élément (111) sur l'écran.

5. Procédé selon l'une quelconque des revendications précédentes, **caractérisé en ce que** l'étape de configuration (E4) de l'affichage souhaité à l'écran par un utilisateur permet d'adapter selon les besoins la présentation du deuxième élément (111).

6. Procédé selon l'une quelconque des revendications précédentes, **caractérisé en ce que** l'étape d'affichage (E3) de l'interface graphique sur l'écran est réalisée de telle sorte à présenter le premier élément (110) et le deuxième élément (111), le deuxième élément (111) comportant au moins deux onglets (114), dont un est actif, et associés chacun à l'un desdits au moins deux environnements graphiques (101, 102), et **en ce que** l'environnement graphique (101, 102) correspondant à l'onglet actif est affiché à l'écran comme contenu du premier élément (110).

7. Procédé selon la revendication précédente, **caractérisé en ce qu'**il comporte les étapes suivantes :
- sélectionner, parmi lesdits au moins deux onglets (114), un onglet à activer distinct de l'onglet actif courant,
- activer l'onglet (114) sélectionné en modifiant le contenu du premier élément (110) affiché, ledit contenu modifié correspondant à l'environnement graphique (101, 102) associé audit onglet sélectionné de sorte à provoquer un changement de charte graphique au sein du premier élément (110).

8. Procédé selon l'une des revendications précédentes, **caractérisé en ce qu'**il comporte une étape (E6) dans laquelle au moins l'un des actionneurs domotiques est actionné à partir de deux environnements distincts.

9. Procédé selon la revendication précédente, **caractérisé en ce qu'**il comporte une première étape d'actionnement d'un des actionneurs domotiques consécutivement à une étape d'interaction d'un utilisateur avec une fonction associée à l'un desdits au moins deux environnements graphiques contenu dans le premier élément (110), et une deuxième étape d'actionnement dudit actionneur domotique actionné lors de la première étape d'actionnement consécutivement à une étape d'interaction de l'utilisateur avec une fonction associée à un autre desdits au moins deux environnements graphiques contenu dans le premier élément (110).

10. Procédé selon l'une quelconque des revendications précédentes, **caractérisé en ce qu'**il comporte une étape d'interaction d'un utilisateur avec le contenu du premier élément (110) affiché à l'écran d'où il résulte une étape d'actionnement d'au moins l'un des actionneurs domotiques.

11. Dispositif de supervision (1001) d'une installation domotique, ledit dispositif comprenant au moins deux environnements graphiques (101, 102) associés respectivement à des services domotiques différents et permettant la commande d'actionneurs domotiques de l'installation domotique, lesdits au moins deux environnements graphiques (101, 102) présentant des chartes graphiques différentes, et un écran (1002) sur lequel est affiché au moins une partie d'une interface graphique pour installation domotique, ladite interface graphique comportant un premier élément (110) dont le contenu est sélectionnable parmi n'importe lequel desdits au moins deux environnements graphiques (101, 102) et un deuxième élément (111) dont le contenu présente une charte graphique principale conservée quel que soit le contenu sélectionné du premier élément (110) et permettant de sélectionner ledit contenu du premier élément (110), et en ce qu'il comporte une mémoire munie d'instructions mettant en oeuvre, lorsqu'elles sont exécutées, toutes les étapes du procédé de pilotage selon l'une des revendications 1 à 10.

12. Installation domotique (1000) comportant un dispositif de supervision (1001) selon la revendication 11 sur l'écran duquel est affiché au moins une partie de l'interface graphique et des actionneurs domotiques (1003), au moins l'un des actionneurs domotiques étant relié au dispositif de supervision (1001) de telle sorte à pouvoir être piloté à partir de deux environnements graphiques distincts.

## Patentansprüche

1. Verfahren zum Steuern von Heimautomatisierungsdiensten einer Heimanlage, **dadurch gekennzeichnet, dass** es die folgenden Schritte aufweist:
- Bereitstellen (E1) von mindestens zwei Grafikumgebungen (101, 102), die jeweils verschiedenen Heimautomatisierungsdiensten zugeordnet werden, die das Steuern von Heimautomatisierungs-Stellgliedern der Heimanlage ermöglichen, wobei die mindestens zwei Grafikumgebungen (101, 102) verschiedene grafische Darstellungen aufweisen,
- Bereitstellen (E2) einer grafischen Schnittstelle, die ein erstes Element (110), dessen Inhalt aus einer beliebigen der mindestens zwei Grafikumgebungen (101, 102) auswählbar ist, und ein zweites Element (111) aufweist, dessen Inhalt eine grafische Hauptdarstellung aufweist, die unabhängig von dem ausgewählten Inhalt des ersten Elements (110) beibehalten wird, und ermöglicht, den Inhalt des ersten Elements (110) auszuwählen,
- Anzeigen (E3) mindestens eines Teils der grafischen Schnittstelle auf einem Bildschirm,
dadurch, dass es einen Schritt (E5) des Auswählens des Steuerns eines Heimautomatisierungs-Stellglieds durch eine oder eine andere von zwei Grafikumgebungen (101, 102) aufweist, von denen ausgehend die Steuerung des Heimautomatisierungs-Stellglieds zugänglich ist, dadurch, dass die zwei Grafikumgebungen (101, 102) mindestens gemeinsame Ergonomieelemente teilen, dadurch, dass eine Einwirkung auf ein Interaktionselement in einem ersten Inhalt, der einer der Grafikumgebungen zugeordnet ist, des ersten Element (110) den gleichen Navigationseffekt wie die Einwirkung auf dieses Interaktionselement in einem zweiten Inhalt, der einer anderen der Grafikumgebungen zugeordnet ist, des ersten Elements (110) aufweist, und dadurch, dass das Verfahren einen Schritt des Konfigurierens (E4) der Anzeige aufweist, wobei dieser Schritt des Konfigurierens ermöglicht, die Grafikumgebung (101, 102) standardmäßig auszuwählen, die als Inhalt des ersten Elements (110) angezeigt wird, wenn das Verfahren zum Steuern initialisiert wird.

2. Verfahren nach dem vorhergehenden Anspruch, **dadurch gekennzeichnet, dass** der Schritt des Anzeigens (E3) derart ist, dass das erste und zweite Element (110, 111) gleichzeitig auf dem Bildschirm angezeigt werden.

3. Verfahren nach dem vorhergehenden Anspruch, **dadurch gekennzeichnet, dass** der Schritt des Anzeigens (E3) derart ist, dass das zweite Element (111) derart angeordnet ist, um:
- das erste Element (110) zu umgeben oder
- angrenzend an das erste Element (110) zu sein oder
- in dem ersten Element (110), insbesondere in der Form eines Symbols, enthalten zu sein.

4. Verfahren nach Anspruch 1, **dadurch gekennzeichnet, dass** der Schritt des Anzeigens (E3) derart ausgeführt wird, dass das erste und das zweite Element (110, 111) nicht gleichzeitig angezeigt werden, wobei das zweite Element (111) Interaktionselemente (112a, 112b) aufweist, die ermöglichen, den Inhalt des ersten Elements (110) auszuwählen und das Anzeigen des ersten Elements (110) auf dem Bildschirm zu bewirken, wobei jede der mindestens zwei Grafikumgebungen (101, 102) ein Interaktionselement (113) aufweist, das ermöglicht, zur Anzeige des zweiten Elements (111) auf dem Bildschirm zurückzukehren.

5. Verfahren nach einem der vorhergehenden Ansprüche, **dadurch gekennzeichnet, dass** der Schritt des Konfigurierens (E4) der gewünschten Anzeige auf dem Bildschirm durch einen Benutzer ermöglicht, die Darstellung des zweiten Elements (111) nach Bedarf anzupassen.

6. Verfahren nach einem der vorhergehenden Ansprüche, **dadurch gekennzeichnet, dass** der Schritt des Anzeigens (E3) der grafischen Schnittstelle auf dem Bildschirm derart durchgeführt wird, um das erste Element (110) und das zweite Element (111) darzustellen, wobei das zweite Element (111) mindestens zwei Registerkarten (114) aufweist, wovon eine aktiv ist und die jeweils einer der mindestens zwei Grafikumgebungen (101, 102) zugeordnet werden, und dadurch, dass die Grafikumgebung (101, 102), die der aktiven Registerkarte entspricht, auf dem Bildschirm als Inhalt des ersten Elements (110) angezeigt wird.

7. Verfahren nach dem vorhergehenden Anspruch, **dadurch gekennzeichnet, dass** es den folgenden Schritt aufweist:
- Auswählen aus den mindestens zwei Registerkarten (114) einer zu aktivierenden Registerkarte, die von der aktuellen aktiven Registerkarte verschieden ist,
- Aktivieren der ausgewählten Registerkarte (114) durch Modifizieren des Inhalts des ersten angezeigten Elements (110), wobei der modifizierte Inhalt der Grafikumgebung (101, 102) entspricht, die der ausgewählten Registerkarte zugeordnet wird, derart, um eine Änderung der Grafikkarte innerhalb des ersten Elements (110) zu bewirken.

8. Verfahren nach einem der vorhergehenden Ansprüche, **dadurch gekennzeichnet, dass** es einen Schritt (E6) aufweist, bei dem mindestens eines der Heimautomatisierungs-Stellglieder ausgehend von zwei verschiedenen Umgebungen betätigt wird.

9. Verfahren nach dem vorhergehenden Anspruch, **dadurch gekennzeichnet, dass** es einen ersten Schritt des Betätigens eines der Heimautomatisierungs-Stellglieder nach einem Interaktionsschritt eines Benutzers mit einer Funktion, die einer der mindestens zwei Grafikumgebungen zugeordnet wird, die in dem ersten Element (110) enthalten ist, und einen zweiten Schritt des Betätigens des Heimautomatisierungs-Stellglieds aufweist, das bei dem ersten Schritt des Betätigens nach einem Interaktionsschritt des Benutzers mit einer Funktion betätigt wird, die einer anderen der mindestens zwei Grafikumgebungen zugeordnet wird, die in dem ersten Element (110) enthalten ist.

10. Verfahren nach einem der vorhergehenden Ansprüche, **dadurch gekennzeichnet, dass** es einen Interaktionsschritt eines Benutzers mit dem Inhalt des ersten Elements (110), das auf dem Bildschirm angezeigt wird, aufweist, woraus sich ein Schritt des Betätigens von mindestens einem der Heimautomatisierungs-Stellglieder ergibt.

11. Überwachungsvorrichtung (1001) einer Heimanlage, wobei die Vorrichtung mindestens zwei Grafikumgebungen (101, 102), die jeweils verschiedenen Heimautomatisierungsdiensten zugeordnet sind und das Steuern von Heimautomatisierungs-Stellgliedern der Heimanlage ermöglichen, wobei die zwei Grafikumgebungen (101, 102) verschiedene grafische Darstellungen aufweisen, und einen Bildschirm (1002) aufweist, auf dem mindestens ein Teil einer grafischen Schnittstelle für die Heimanlage angezeigt wird, wobei die grafische Schnittstelle ein erstes Element (110), dessen Inhalt aus einer beliebigen der mindestens zwei Grafikumgebungen (101, 102) auswählbar ist, und ein zweites Element (111) aufweist, dessen Inhalt eine grafische Hauptdarstellung aufweist, die unabhängig von dem ausgewählten Inhalt des ersten Elements (110) beibehalten wird, und ermöglicht, den Inhalt des ersten Elements (110) auszuwählen, und dadurch, dass sie einen Speicher aufweist, der mit Anweisungen ausgestattet ist, die, wenn sie ausgeführt werden, alle Schritte des Verfahrens zum Steuern nach einem der Ansprüche 1 bis 10 umsetzen.

12. Heimanlage (1000), umfassend eine Überwachungsvorrichtung (1001) nach Anspruch 11, auf deren Bildschirm mindestens ein Teil der grafischen Schnittstellen und der Heimautomatisierungs-Stellglieder (1003) angezeigt wird, wobei mindestens eines der Heimautomatisierungs-Stellglieder mit der Überwachungsvorrichtung (1001) derart verbunden ist, um ausgehend von zwei verschiedenen Grafikumgebungen gesteuert werden zu können.

## Claims

1. Method for controlling home-automation services of a home-automation installation, **characterized in that** it comprises the following steps:
- providing (E1) at least two graphic environments (101, 102) respectively associated with different home-automation services and permitting control of home-automation actuators of the home-automation installation, said at least two graphic environments (101, 102) having different graphic charters,
- providing (E2) a graphical interface comprising a first element (110) of which the content can be chosen from among any one of said at least two graphic environments (101, 102) and a second element (111) of which the content has a main graphic charter that is retained whatever the chosen content of the first element (110), and making it possible to choose said content of the first element (110),
- displaying (E3) on a screen at least part of the graphical interface,
**in that** it comprises a step (E5) of choosing to control a home-automation actuator via one or other of two graphic environments (101, 102) from which it is possible to access the home-automation actuator control, **in that** the two graphic environments (101, 102) share at least some common ergonomics elements, **in that** an action on one interaction element in a first content, associated with one of the graphic environments, of the first element (110) will have the same navigation effect as the action on this interaction element in a second content, associated with another of the graphic environments, of the first element (110), and **in that** the method comprises a step (E4) of configuring the display, this display configuration step making it possible to choose the graphic environment (101, 102) that displays by default as the content of the first element (110) when the control method is initialized.

2. Method according to the preceding claim, **characterized in that** the display step (E3) is such that the first and second elements (110, 111) are displayed simultaneously on the screen.

3. Method according to the preceding claim, **characterized in that** the display step (E3) is such that the second element (111) is arranged so as to:
- surround the first element (110), or
- be adjacent to the first element (110), or
- be included in the first element (110), in particular in the form of an icon.

4. Method according to Claim 1, **characterized in that** the display step (E3) is carried out such that the first and second elements (110, 111) are not displayed simultaneously, the second element (111) comprising interaction elements (112a, 112b) that make it possible to select the content of the first element (110) and to cause said first element (110) to display on the screen, each of said at least two graphic environments (101, 102) comprising an interaction element (113) with which it is possible to return to the display of the second element (111) on the screen.

5. Method according to any one of the preceding claims, **characterized in that** the step (E4) of configuring the display desired on the screen by a user makes it possible to adapt the presentation of the second element (111) according to requirements.

6. Method according to any one of the preceding claims, **characterized in that** the step (E3) of displaying the graphical interface on the screen is carried out so as to present the first element (110) and the second element (111), the second element (111) comprising at least two tabs (114), one of which is active, and which are each associated with one of said at least two graphic environments (101, 102), and **in that** the graphic environment (101, 102) corresponding to the active tab is displayed on the screen as the content of the first element (110).

7. Method according to the preceding claim, **characterized in that** it comprises the following steps:
- selecting, from among said at least two tabs (114), a tab that is to be activated and that is different from the current active tab,
- activating the selected tab (114), modifying the content of the displayed first element (110), said modified content corresponding to the graphic environment (101, 102) associated with said selected tab so as to change the graphic charter within the first element (110).

8. Method according to one of the preceding claims, **characterized in that** it comprises a step (E6) in which at least one of the home-automation actuators is activated from two different environments.

9. Method according to the preceding claim, **characterized in that** it comprises a first step of activating one of the home-automation actuators following a step of a user interacting with a function associated with one of said at least two graphic environments contained in the first element (110), and a second step of activating said home-automation actuator activated during the first activation step following a step of the user interacting with a function associated with another of said at least two graphic environments contained in the first element (110).

10. Method according to any one of the preceding claims, **characterized in that** it comprises a step of a user interacting with the content of the first element (110) displayed on the screen, the result of which is a step of activating at least one of the home-automation actuators.

11. Device (1001) for supervising a home-automation installation, said device comprising at least two graphic environments (101, 102) respectively associated with different home-automation services and permitting control of home-automation actuators of the home-automation installation, said at least two graphic environments (101, 102) having different graphic charters, and a screen (1002) which displays at least part of a graphical interface for a home-automation installation, said graphical interface comprising a first element (110) of which the content can be chosen from among any one of said at least two graphic environments (101, 102) and a second element (111) of which the content has a main graphic charter that is retained whatever the chosen content of the first element (110), and making it possible to choose said content of the first element (110), and in that it comprises a memory having instructions which, when they are executed, implement all of the steps of the control method according to one of Claims 1 to 10.

12. Home-automation installation (1000) comprising a supervision device (1001) according to Claim 11, the screen of which displays at least part of the graphical interface, and home-automation actuators (1003), at least one of the home-automation actuators being connected to the supervision device (1001) such that it can be controlled from two different graphic environments.
